(19) Europäisches Patentamt

European Patent Office

Office européen des brevets

(11) **EP 1 633 086 A2**

(12) **EUROPEAN PATENT APPLICATION**

(43) Date of publication:
**08.03.2006 Bulletin 2006/10**

(51) Int Cl.:
*H04L 12/28* (2006.01)

(21) Application number: **05107993.7**

(22) Date of filing: **01.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.09.2004 FI 20045327**

(71) Applicant: **Nokia Corporation**
**02150 Espoo (FI)**

(72) Inventor: **Yu, Ling**
**90650 Oulu (FI)**

(74) Representative: **Antila, Harri Jukka Tapani**
**Kolster Oy Ab,**
**Iso Roobertinkatu 23,**
**(P.O. Box 148)**
**00120 Helsinki (FI)**

(54) **Radio system, base station, controller, and method of controlling data transmission**

(57) There is provided a method of controlling data transmission, a radio system, a base station and a controller. The base station is configured to determine a current allocated capacity for a priority queue by increasing the allocated capacity in the last control message when the amount of data in the buffer for the priority queue is less than the lower buffer threshold parameter. The base station also is configured to determine an allocated capacity for a priority queue by decreasing the allocated capacity used in a priority queue when the amount of data in the buffer for the priority queue is greater than the higher buffer threshold parameter. The base station also is configured to use the determined current allocated capacity as a parameter in a control message between the base station and the controller.

Fig. 2

## Description

### Field

The invention relates to a method of controlling data transmission in a radio system, to a radio system, to a base station for a radio system, and to a controller for a radio system.

### Background

In the ongoing standardisation work in WCDMA (Wideband Code Division Multiple Access) evolution in 3GPP (3rd Generation Partnership Project), a new concept called HSDPA (High Speed Downlink Packet Access) has been introduced for Release 5. The transport channel of HSDPA supports fast link adaptation (LA) where the bit rate is varied in each transmission time interval (TTI). The bit rate is varied by mapping the transport channel into a variable number of parallel multi-codes with a variable effective code rate (ECR).

New functionalities of HSDPA radio systems are included in a new entity called MAC-hs (Medium Access Control), which is located in Node B. However, other Layer 2 functionalities, such as RLC (Radio Link Control), MAC-d and MAC-c/sh, are located in RNC (Radio Network Controller). Due to the separation of Layer 2 functionalities for HSDPA, a flow control function is needed in both Node B and RNC to control data flows between them. The flow control function is needed in both Node B and RNC side for providing a controlled data flow between MAC-hs and MAC-d or MAC-c/sh. For this purpose, two flow control messages are specified in 3GPP. The flow control messages are HS-DSCH (High Speed-Downlink Shared Channel) Capacity Request message from RNC to Node B and HS-DSCH Capacity Allocation message from Node B to RNC.

However, in addition to the flow control messages, flow control algorithms are needed in Node B and in RNC for controlling the generation of the flow control messages and for setting different parameters of the flow control messages. Further, in situations where Node B has allocated more capacity than there is transport capacity available, there is a need for a solution in RNC for controlling data transmission from RNC to Node B.

### Brief description of the invention

An object of the invention is to provide a method of controlling data transmission, a radio system, a base station, and a controller. According to an aspect of the invention, there is provided a method of controlling data transmission in a radio system, the method comprising: transmitting control messages between a base station and a controller of the radio system, the control messages controlling data transmission between the base station and the controller; applying priority queuing, in which the controller serves a lower priority queue only if higher priority queues are empty when total allocated transport capacity is larger than available transport capacity. The method comprises allocating a buffer for storing data received from the controller for each priority queue; determining a lower buffer threshold parameter and a higher buffer threshold parameter in the base station; determining a current allocated capacity for a priority queue by increasing the allocated capacity in the last control message when the amount of data in the buffer for the priority queue is less than the lower buffer threshold parameter; determining a current allocated capacity for a priority queue by decreasing the allocated capacity used in a priority queue when the amount of data in the buffer for the priority queue is greater than the higher buffer threshold parameter; and using the determined current allocated capacity as a parameter in a control message between the base station and the controller.

According to another aspect of the invention, there is provided a radio system comprising a base station and a controller, the radio system being configured to transmit control messages between the base station and the controller, the control messages controlling data transmission in the radio system, wherein the controller is configured to apply priority queuing, in which a lower priority queue is served only if higher priority queues are empty when total allocated transport capacity is larger than available transport capacity. The base station is further configured to allocate a buffer for storing data received from the controller for each priority queue; to determine a lower buffer threshold parameter and a higher buffer threshold parameter; to determine a current allocated capacity for a priority queue by increasing the allocated capacity in the last control message when the amount of data in the buffer for the priority queue is less than the lower buffer threshold parameter; to determine a current allocated capacity for a priority queue by decreasing the allocated capacity used in a priority queue when the amount of data in the buffer for the priority queue is greater than the higher buffer threshold parameter; and to use the determined current allocated capacity as a parameter in a control message between the base station and the controller.

According to an aspect of the invention, there is provided a base station for a radio system, the base station comprising one or more transceivers for communicating control messages between the base station and a controller applying priority queuing, in which a lower priority queue is served only if higher priority queues are empty when total allocated transport capacity is larger than available transport capacity, the control messages controlling data transmission between the base station and the controller, and a processing unit for controlling the functions of the base station. The base station is further configured to allocate a buffer for storing data received from the controller for each priority queue; to determine a lower buffer threshold parameter and a higher buffer threshold parameter; to determine a lower buffer threshold parameter and a higher buffer threshold parameter; to determine a current allocated capacity for a priority queue by increasing the allocated capacity in the last control message when the amount of data in the buffer for the priority queue is less than the lower buffer threshold parameter; to determine a current allocated capacity for a priority queue by decreasing the allocated capacity used in a priority queue when the amount of data in the buffer for the priority queue is greater than the higher buffer threshold parameter; and to use the determined current allocated capacity as a parameter in a control message between the base station and the controller.

According to an aspect of the invention, there is provided a controller for a radio system, the controller comprising one or more transceivers for communicating control messages between the controller and a base station, the control messages controlling data transmission between the base station and the controller, and a processing unit for controlling the functions of the controller, and for applying priority queuing, in which a lower priority queue is served only if higher priority queues are empty when total allocated transport capacity is larger than available transport capacity. The processing unit is further configured to receive a current allocated capacity determined for a priority queue in the base station, and to transmit data from the controller to the base station on the basis of the received current allocated capacity, the current allocated capacity for a priority queue being determined by increasing the allocated capacity in the last control message when the amount of data in the buffer for the priority queue is less than the lower buffer threshold parameter; or by decreasing the allocated capacity used in a priority queue when the amount of data in the buffer for the priority queue is greater than the higher buffer threshold parameter.

According to an aspect of the invention, there is provided a radio system comprising a base station and a controller, the radio system being configured to transmit control messages between the base station and the controller, the control messages controlling data transmission in the radio system, the controller comprising means for applying priority queuing, in which a lower priority queue is served only if higher priority queues are empty when total allocated transport capacity is larger than available transport capacity. The base station further comprising: means for allocating a buffer for storing data received from the controller for each priority queue; first determining means for determining a lower buffer threshold parameter and a higher buffer threshold parameter; second determining means for determining an allocated capacity for a priority queue by increasing the allocated capacity in the last control message when the amount of data in the buffer for the priority queue is less than the lower buffer threshold parameter; third determining means for determining an allocated capacity for a priority queue by decreasing the allocated capacity used in a priority queue when the amount of data in the buffer for the priority queue is greater than the higher buffer threshold parameter; and means for using the determined current allocated capacity as a parameter in a control message between the base station and the controller.

The invention provides several advantages. A control method for controlling data transmission is provided. A better control of data transmission between a base station and a controller is achieved.

**List of drawings**

In the following, the invention will be described in greater detail with reference to the embodiments and the accompanying drawings, in which
Figure 1 is a simplified block diagram illustrating the structure of a radio system;
Figure 2 shows a simplified outline of an embodiment of the present invention, and
Figure 3 illustrates a method of controlling data transmission in a radio system.

**Description of embodiments**

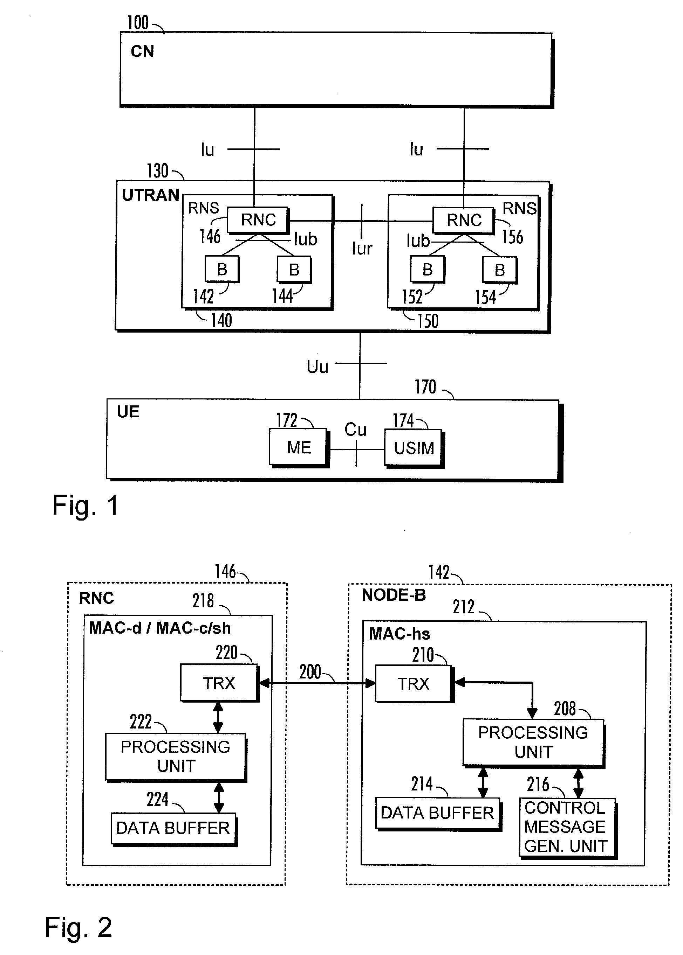

With reference to Figure 1, let us examine an example of a radio system in which the preferred embodiments of the invention can be applied. A radio system in Figure 1, known at least as UMTS (Universal Mobile Tele-communications System) and IMT-2000 (International Mobile Telecommunications 2000), represents the third-generation radio systems. The embodiments are, however, not restricted to these systems described by way of example, but a person skilled in the art can also apply the instructions to other radio systems containing corresponding characteristics.
Figure 1 is a simplified block diagram, which shows the most important parts of a radio system and the interfaces between them at network-element level. The structure and functions of the network elements are not described in detail, because they are generally known.
The main parts of a radio system are a core network (CN) 100, a radio access network 130 and user equipment (UE) 170. The term UTRAN is short for UMTS Terrestrial Radio Access Network, i.e. the radio access net-work 130 belongs to the third generation and is implemented by wideband code division multiple access (WCDMA) technology. The main elements of the UTRAN are radio network controller (RNC) 146, 156, Node Bs 142, 144, 152, 154 and user equipment 170. The UTRAN is attached to the existing GSM core network 100 via an interface, called Iu. This interface is supported by RNC 146, 156, which manages a set of base stations called Node Bs 142, 144, 152, 154 through interfaces called Iub. The UTRAN is largely autonomous from the core network 100 since the RNCs 146, 156 are interconnected by the Iur interface.

From the point of view of Node B 142, 144, 152, 154, i.e. base station, there is one controlling RNC 146, 156, where its Iub interface terminates. The controlling RNC 146, 156 also takes care of admission control for new mobiles or services attempting to use the Node B 142, 144, 152, 154. The controlling RNC 146, 156 and its Node Bs 142, 144, 152, 154 form an RNS (Radio Network Subsystem) 140, 150.

The user equipment 170 may comprise mobile equipment (ME) 172 and UMTS subscriber identity module (USIM) 174. USIM 174 contains information related to the user and information related to information security in particular, for instance, an encryption algorithm.

From the user equipment 170 point of view, there is a serving RNC 146, 156 that terminates the mobiles link layer communications. From the CN 100 point of view, the serving RNC 146, 156 terminates the Iu for this user equipment 170. The serving RNC 146, 156 also takes care of admission control for new mobiles or services attempting to use the CN 100 over its Iu inter-face.

In UMTS, the most important interfaces between network elements are the Iu interface between the CN 100 and the radio access network 130, which is divided into the interface IuCS on the circuit-switched side and the interface IuPS on the packet-switched side, and the Uu interface between the radio access network and the user equipment.

The HSDPA (High Speed Downlink Packet Access) concept has been introduced to increase packet data throughput by means of fast physical layer retransmission and transmission combining as well as fast link adaptation controlled by the Node B. In HSDPA, the link adaptation decisions are per-formed in the Node B. The HS-DPCCH (High Speed - Dedicated Physical Control Channel) is used in HSDPA for providing feedback information from the user equipment 170 to the Node B. The HS-DPCCH carries the necessary control information in the uplink, that is, ARQ acknowledgements (both positive and negative) and downlink quality feedback information. Thus, the HS-DPCCH channel may carry H-ARQ information (ACK/NACK) and channel quality indicator (CQI) information bits.

The flow control messages are used in communication between the Node B 142, 144, 152, 154 and the RNC 146, 156. In addition to signalling messages, flow control algorithms are needed in the Node B 142, 144, 152, 154 and RNC 146, 156 to decide when to generate flow control messages and how to set the parameters of the messages. The flow control algorithm should take many factors into account. For example, the flow control algorithm may help avoid overflow of a Node B buffer as much as possible. The Node B buffer is used for storing the user data from the RNC 146, 156. Secondly, the flow control algorithm may ensure that the data in the RLC buffer can be transferred to the Node B buffer at the right time. The RLC buffer is used for storing user data from a higher layer. Further, the flow control algorithm may ensure that no more data is transmitted from the RNC 146, 156 to the Node B 142, 144, 152, 154 than the transport bearer has capacity for because the transport bearer between the RNC 146, 156 and the Node B 142, 144, 152, 154 has its own capacity limitations. The flow control signalling messages reserve some Iub transport capacity. From point of view of user data throughput, they are control overhead. Thus, the flow control algorithm may also avoid transmitting messages when it is not necessary.

Figure 2 shows a simplified outline of an embodiment of the present invention. The HSDPA-related MAC functionality is included in a unit called MAC-hs 212 located in the Node B 142. The MAC-hs 212 is responsible for handling the data transmitted on the transport channels of the radio system. The MAC function defines the procedures that enable multiple mobile stations to share a common transmission medium, which may consist of several physical channels. The MAC-hs 212 may be carried out as a software implementation, which is run on a DSP (digital signal processor) or a microprocessor, for example.

The Node B 142 comprises one or more transceivers 210 for communicating control messages between the Node B 142 and the RNC 146, the control messages controlling data transmission between the Node B 142 and the RNC 146. The Node B 142 also comprises a processing unit 208 for controlling the functions of the Node B 142. The Node B 142 may also comprise a data buffer 214 and a unit 216 for generating control messages. The Node B data buffer 214 is used for storing the user data from the RNC 146. The RNC 146 is configured to apply priority queuing in which a lower priority queue is served only if higher priority queues are empty when total allocated transport capacity is larger than available transport capacity. The Node B 142 may also comprise the following elements: a link adaptation and packet scheduler unit, a link adaptation unit, an H-ARQ manager, for example.

The HSDPA-related MAC functionality in the RNC 146 may be included in units called RLC (Radio Link Control), MAC-d or MAC-c/sh 218. The RLC function defines the procedures for a bitmap selective retransmission of unsuccessfully delivered RLC data blocks. The RLC/MAC function provides an unacknowledged operation and an acknowledged operation.

The RNC 146 comprises one or more transceivers 220 for communicating control messages between the RNC 146 and the Node B 142, the control messages controlling data transmission 200 between the Node B 142 and the RNC 146. The RNC 146 also comprises a processing unit 222 for controlling the functions of the RNC 146. The RNC 146 may also comprise a data buffer 224. The RLC data buffer 224 is used for storing user data received from higher layers.

In an embodiment, the Node B 142 is configured to determine a lower buffer threshold and a higher buffer threshold parameters, to determine a current allocated capacity for a priority queue by increasing the allocated capacity in the last control message when the amount of data in the data buffer 214 for the priority queue is less than the lower buffer threshold parameter. The Node B 142 is further configured to determine a current allocated capacity for a priority queue by decreasing the allocated capacity used in a priority queue when the amount of data in the data buffer 214 for the priority queue is greater than the higher buffer threshold parameter; and to use the determined current allocated capacity as a parameter in a control message between the Node B 142 and the RNC 146.

The HS-DSCH Capacity Allocation message includes a number of parameters that can be found in 3GPP TS 25.435. The allocated capacity for each priority queue indicated by CmCH-PI (Common Transport Channel-Priority Indicator) can be calculated by multiplying a quotient of a value of HS-DSCH Credits parameter and a value of HS-DSCH Interval parameter by a value of Maximum MAC-d PDU (Packet Data Unit) length parameter by using formula 1:

$$C = \frac{Cr}{I} \cdot S_{PDU} \tag{1}$$

where:

 C is the allocated capacity for each priority queue,
 Cr is the value of HS-DSCH Credits parameter,
 I is the value of HS-DSCH Interval parameter, and
 $S_{PDU}$ is the value of Maximum MAC-d PDU Length parameter.

In Node B 142, each priority queue is allocated a separate data buffer 214 for storing user data from the RNC. The amount of data in the Node B data buffer 214 for each priority queue may be calculated by using formula 2:

$$B = \sum_i S_{PDU_i} \tag{2}$$

where:

 B is the amount of data in Node B buffer for each priority queue, and
 $S_{PDUi}$ is the size of $i^{th}$ MAC-d PDU in the Node B buffer.

In an embodiment, the lower and higher buffer thresholds $B_L$ and $B_H$ may be defined for a flow control algorithm in the Node B 142. If it is detected that the Node B data buffer 214 for each priority queue B is less than $B_L$, that is $B<B_L$, then the allocated capacity for this priority queue will be increased by $C_{new}=C_{old}+C_{up}$. On the other hand, if it is detected that the Node B data buffer 214 for each priority queue B is greater than $B_H$, that is $B> B_H$, then the allocated capacity will be decreased by $C_{new}=C_{old}-C_{down}$. In the case of increasing the allocated capacity, $C_{old}$ is the capacity allocated in the last HS-DSCH Capacity Allocation message. Further, in the case of decreasing the allocated capacity, $C_{old}$ is the capacity which is actually used by the priority queue (less than or equal to the allocated capacity in the last HS-DSCH Capacity Allocation message). $C_{up}$ or $C_{down}$ is the step size for increasing or decreasing the allocated capacity.

According to equation 1, changing one or more parameters of equation 1 can change the allocated capacity. The easiest way to change the allocated capacity is to change the value of HS-DSCH Credits parameter, which means the number of MAC-d PDUs that the RNC 146 is allowed to transmit to the Node B 142. In order to avoid undesired updating of the allocated capacity, a timer-based hysteresis method may be used, i.e. a condition must be fulfilled during a predefined time period before the allocated capacity can be increased or decreased. Thus, the Node B 142 is further configured to detect that the amount of data in the data buffer 214 for a priority queue is less than the lower buffer threshold parameter or greater than the higher buffer threshold parameter for a predetermined time period before defining the current allocated capacity for the priority queue.

Because the Node B 142 does not have knowledge of the transport capacity reserved for HSDPA, the Node B 142 cannot guarantee that the allocated capacity is lower than the reserved transport capacity. Thus, in an embodiment, a parameter called a Maximum Allowed Capacity is defined for each priority queue. When the allocated capacity needs to be increased for any priority queue as described above, the Node B 142 may ensure that the allocated capacity is not larger than the Maximum Allowed Capacity. This way the total allocated capacity can be controlled to some extent but not totally. Thus, a flow control algorithm may also be used in the RNC 146 to guarantee that the data amount transmitted over lub is not larger than the available transport capacity.

In an embodiment, if the RNC 146 detects that the allocated capacity is lower than the reserved transport capacity, then the requested data amount as indicated in the HS-DSCH Capacity Allocation message will be transmitted to the Node B 142 when there is enough data in the RLC data buffer 224. If the RNC 146 detects that the allocated capacity is larger than the reserved transport capacity, then the RNC 146 may transmit the data to the Node B 142 on the basis of the priority, RLC buffer status 224 and allocated capacity for each priority queue. The priority queue with a higher priority will transmit the data to the Node B 142 first. For the priority queues with the same priority, a priority queue may make the transmission first if the priority queue has less amount of data in the RLC data buffer 224 than the value of HS-DSCH Credits in the latest HS-DSCH Capacity Allocation message. If there is still some transport capacity available, then other priority queues may share the transport capacity based on the allocated capacity by using equation 3:

$$C_i' = \frac{C_i}{\sum_{j=1}^{N} C_j} \cdot C_{total} \qquad (3)$$

where:

$C_i'$ is the actual transport capacity used for transmitting data from RNC to Node B for a priority queue i,
$C_i$ is the allocated capacity for the priority queue i (calculated by equation 1), and
$C_{total}$ is the available transport capacity for all the priority queues.

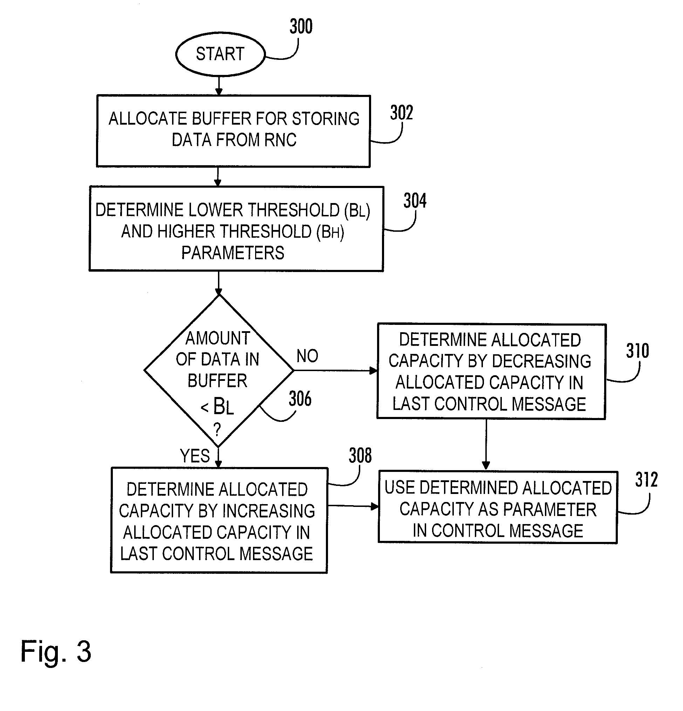

Figure 3 illustrates a method of controlling data transmission in a radio system. In the method, control messages are transmitted between a base station and a controller of the radio system, the control messages controlling data transmission between the base station and the controller. Further, priority queuing in which the controller serves a lower priority queue only if higher priority queues are empty when total allocated transport capacity is larger than available transport capacity is applied in the radio system. The method starts in 300. In 302, a buffer for storing data received from the controller for each priority queue is allocated in the base station. In 304, the base station determines a lower threshold ($B_L$) and higher threshold ($B_H$) parameters.

In 306, it is detected whether the amount of data in the buffer for storing data received from the controller for each priority queue is less than the lower buffer threshold parameter ($B_L$). If it is detected that the amount of data in the buffer is less than the lower buffer threshold parameter ($B_L$), 308 is entered, where a current allocated capacity for a priority queue is determined by increasing the allocated capacity in the last control message. When it is detected in 306 that the amount of data in the buffer for the priority queue is greater than the higher buffer threshold parameter, then 310 is entered. In 310, a current allocated capacity for a priority queue is determined by decreasing the allocated capacity used in a priority queue. In 312, the determined current allocated capacity is used as a parameter in a control message between the base station and the controller.

Even though the invention is described above with reference to an example according to the accompanying drawings, it is clear that the invention is not restricted thereto but it can be modified in several ways within the scope of the appended claims.

**Claims**

1. A method of controlling data transmission in a radio system, the method comprising:

transmitting control messages between a base station and a controller of a radio system, wherein the control messages control data transmission between the base station and the controller;
applying priority queuing, wherein the controller serves a lower priority queue only if higher priority queues are empty when total allocated transport capacity is larger than available transport capacity;
**characterized by** the method further comprising:
allocating a buffer for storing data received from the controller for a priority queue;
determining a lower buffer threshold parameter and a higher buffer threshold parameter in the base station;
determining a current allocated capacity for the priority queue by increasing an allocated capacity in a last control message when an amount of data in the buffer for the priority queue is less than the lower buffer threshold parameter;

determining the current allocated capacity for the priority queue by decreasing the allocated capacity used in the priority queue when the amount of data in the buffer for the priority queue is greater than the higher buffer threshold parameter; and

using the current allocated capacity as a parameter in a control message between the base station and the controller.

2. The method of claim 1, the method further comprising:

comparing the total current allocated capacity of all the priority queues and the available transport capacity; transmitting data from the controller to the base station on a basis of the current allocated capacity when the total current allocated capacity of all the priority queues is lower than the available transport capacity; and transmitting data from the controller to the base station on a priority basis, controller buffer status and allocated capacity for the priority queue when the total current allocated capacity of all the priority queues is larger than the available transport capacity.

3. The method of claim 1, wherein the control messages between the base station and the controller comprise capacity allocation messages from the base station to the controller, the capacity allocation messages including a credits parameter, an interval parameter and a maximum Medium Access Control-d (MAC-d) Packet Data Unit (PDU)length parameter.

4. The method of claim 1, the method comprising defining the allocated capacity in the last control message by multiplying a quotient of a value of a credits parameter and a value of an interval parameter by a value of a maximum MAC-d PDU Length parameter.

5. The method of claim 1, the method further comprising detecting that the amount of data in the buffer for the priority queue is less than the lower buffer threshold parameter or greater than the higher buffer threshold parameter for a predetermined time period before defining the current allocated capacity for the priority queue.

6. A radio system comprising a base station and a controller, the radio system configured to transmit control messages between the base station and the controller, the control messages controlling data transmission in the radio system, wherein the controller is configured to apply priority queuing, wherein a lower priority queue is served only if higher priority queues are empty when total allocated transport capacity is larger than available transport capacity, **characterized in that** the base station is further configured to:

allocate a buffer for storing data received from the controller for a priority queue; determine a lower buffer threshold parameter and a higher buffer threshold parameter; determine a current allocated capacity for the priority queue by increasing an allocated capacity in a last control message when an amount of data in the buffer for the priority queue is less than the lower buffer threshold parameter; determine the current allocated capacity for the priority queue by decreasing the allocated capacity used in the priority queue when the amount of data in the buffer for the priority queue is greater than the higher buffer threshold parameter; and use the current allocated capacity as a parameter in a control message between the base station and the controller.

7. The radio system of claim 6, wherein the controller is configured to compare the total current allocated capacity of all the priority queues and the available transport capacity, transmit data from the controller to the base station on a basis of the current allocated capacity when the total allocated capacity of all the priority queues is lower than the available transport capacity, and transmit data from the controller to the base station on a priority basis, buffer status and allocated capacity for the priority queue when the total current allocated capacity of all the priority queues is larger than the available transport capacity.

8. The radio system of claim 6, wherein the control messages between the base station and the controller comprise capacity allocation messages from the base station to the controller, the capacity allocation messages including a credits parameter, an interval parameter and a maximum MAC-d PDU length parameter.

9. The radio system of claim 6, wherein the base station is further configured to detect that the amount of data in the buffer for the priority queue is less than the lower buffer threshold parameter or greater than the higher buffer threshold parameter for a predetermined time period before determining the current allocated capacity for the priority queue.

**10.** A base station for a radio system, the base station comprising at least one transceiver for communicating control messages between the base station and a controller applying priority queuing, wherein a lower priority queue is served only if higher priority queues are empty when total allocated transport capacity is larger than available transport capacity, the control messages controlling data transmission between the base station and the controller, and a processing unit for controlling functions of the base station,
**characterized in that** the base station is further configured to:

allocate a buffer for storing data received from the controller for a priority queue;
determine a lower buffer threshold parameter and a higher buffer threshold parameter;
determine a current allocated capacity for the priority queue by increasing an allocated capacity in a last control message when an amount of data in the buffer for the priority queue is less than the lower buffer threshold parameter;
determine the current allocated capacity for the priority queue by decreasing the allocated capacity used in the priority queue when the amount of data in the buffer for the priority queue is greater than the higher buffer threshold parameter; and
use the current allocated capacity as a parameter in a control message between the base station and the controller.

**11.** The base station of claim 10, wherein the control messages between the base station and the controller comprise capacity allocation messages from the base station to the controller, the capacity allocation messages including a credits parameter, an interval parameter and a maximum MAC-d PDU length parameter.

**12.** The base station of claim 10, wherein the base station is further configured to detect that the amount of data in the buffer for the priority queue is less than the lower buffer threshold parameter or greater than the higher buffer threshold parameter for a predetermined time period before defining the current allocated capacity for the priority queue.

**13.** A controller for a radio system, the controller comprising:

at least one transceiver for communicating control messages between the controller and a base station, wherein the control messages control data transmission between the base station and the controller, and
a processing unit for controlling functions of the controller, and for applying priority queuing, wherein a lower priority queue is served only if higher priority queues are empty when total allocated transport capacity is larger than available transport capacity,
**characterized in that** the processing unit is further configured to receive a current allocated capacity determined for a priority queue in the base station, and to transmit data from the controller to the base station on a basis of the current allocated capacity,
wherein the current allocated capacity for the priority queue is determined by increasing an allocated capacity in a last control message when an amount of data in the buffer for the priority queue is less than the lower buffer threshold parameter; or by decreasing the allocated capacity used in the priority queue when the amount of data in the buffer for the priority queue is greater than the higher buffer threshold parameter.

**14.** The controller of claim 13, wherein the processing unit is further configured to transmit data from the controller to the base station on a basis of the current allocated capacity if the total current allocated capacity of all the priority queues is lower than the available transport capacity, and to transmit data from the controller to the base station on a priority basis, buffer status and allocated capacity for the priority queue if the total current allocated capacity of all the priority queues is larger than the available transport capacity.

**15.** A radio system comprising a base station and a controller, the radio system configured to transmit control messages between the base station and the controller, wherein the control messages control data transmission in the radio system, the controller including means for applying priority queuing, wherein a lower priority queue is served only if higher priority queues are empty when total allocated transport capacity is larger than available transport capacity, **characterized in that** the base station includes:

allocating means for allocating a buffer for storing data received from the controller for a priority queue;

first determining means for determining a lower buffer threshold parameter and a higher buffer threshold parameter;

second determining means for determining a current allocated capacity for the priority queue by increasing an allocated capacity in a last control message when an amount of data in the buffer for the priority queue is less than the lower buffer threshold parameter;

third determining means for determining the current allocated capacity for the priority queue by decreasing the allocated capacity used in the priority queue when the amount of data in the buffer for the priority queue is greater than the higher buffer threshold parameter; and

means for using the current allocated capacity as a parameter in a control message between the base station and the controller.

Fig. 1

Fig. 2

```
                    ┌─────────┐  300
                    │  START  │
                    └────┬────┘
                         │
            ┌────────────▼──────────────┐
            │ ALLOCATE BUFFER FOR STORING│  302
            │      DATA FROM RNC         │
            └────────────┬───────────────┘
                         │
            ┌────────────▼───────────────┐
            │ DETERMINE LOWER THRESHOLD  │  304
            │ (BL) AND HIGHER THRESHOLD  │
            │ (BH) PARAMETERS            │
            └────────────┬───────────────┘
```

DETERMINE LOWER THRESHOLD (B_L) AND HIGHER THRESHOLD (B_H) PARAMETERS — 304

AMOUNT OF DATA IN BUFFER $< B_L$ ? — 306

NO → DETERMINE ALLOCATED CAPACITY BY DECREASING ALLOCATED CAPACITY IN LAST CONTROL MESSAGE — 310

YES → DETERMINE ALLOCATED CAPACITY BY INCREASING ALLOCATED CAPACITY IN LAST CONTROL MESSAGE — 308

USE DETERMINED ALLOCATED CAPACITY AS PARAMETER IN CONTROL MESSAGE — 312

Fig. 3